Europäisches Patentamt

European Patent Office

Office européen des brevets

(11) Veröffentlichungsnummer: **0 304 398**
**A1**

# EUROPÄISCHE PATENTANMELDUNG

(21) Anmeldenummer: **88810541.8**

(22) Anmeldetag: **09.08.88**

(51) Int. Cl.⁴: **G 01 D 11/24**
**G 12 B 9/08**

(30) Priorität: **21.08.87 CH 3223/87**

(43) Veröffentlichungstag der Anmeldung:
**22.02.89 Patentblatt 89/08**

(84) Benannte Vertragsstaaten: **DE FR GB IT SE**

(71) Anmelder: **KERN & CO. AG**
**CH-5001 Aarau (CH)**

(72) Erfinder: **Hoffmann, Dieter**
**Gartenweg 2**
**CH-5033 Buchs (CH)**

**Hartmann, Jörg**
**Hauptstrasse 14**
**CH-5213 Villnachern (CH)**

(74) Vertreter: **Seeger, Jan**
**c/o Kern & Co. AG**
**CH-5001 Aarau (CH)**

(54) **Instrument mit Verkleidung.**

(57) Durch eine Verbindung der tragenden Instrumentenstruktur (1) mit der Verkleidung (2) mittels in Führungsbahnen (3, 4) geführter Führungsnocken (5', 5") wird erreicht, dass sich die Verkleidung (2) ungehindert ausdehnen und zusammenziehen kann und dass keine störenden Spannungen auf die Instrumentenstruktur übertragen werden.

Fig. 1

EP 0 304 398 A1

## Beschreibung

### Instrument mit Verkleidung

Die Erfindung betrifft ein Instrument mit Verkleidung.

Durch Formänderungen von Verkleidungen, z.B. bei Kunststoffverkleidungen infolge von Temperaturänderungen, Wasseraufnahme, Nachschwinden usw., werden die verkleideten tragenden Strukturen von Instrumenten mit mechanischen Spannungen belastet, wenn die Verkleidung mit der tragenden Struktur fest verbunden ist. Die resultierenden Formänderungen der Instrumente können zu Verfälschungen von Messergebnissen führen, welche mit solchen Instrumenten gewonnen werden.

Aufgabe der Erfindung ist es, bei einem Instrument mit Verkleidung die Verbindung zwischen der Verkleidung und der tragenden Struktur des Instrumentes so zu gestalten, dass Formänderungen der Verkleidung keine Spannungen auf die tragende Instrumentenstruktur übertragen.

Diese Aufgabe wird gemäss der Erfindung durch die Merkmale des Patentanspruches 1 gelöst. Vorteilhafte Weiterbildungen sind Gegenstand der Unteransprüche.

Ein Ausführungsbeispiel der Erfindung wird im folgenden anhand der Figuren beschrieben. Es zeigen schematisch:

Fig. 1 eine Seitenansicht eines Instrumentes mit einer im Schnitt dargestellten Verkleidung und

Fig. 2 eine Ansicht des Instrumentes gemäss Fig. 1 von oben, wobei die Verkleidung längs der Linie A-A geschnitten ist.

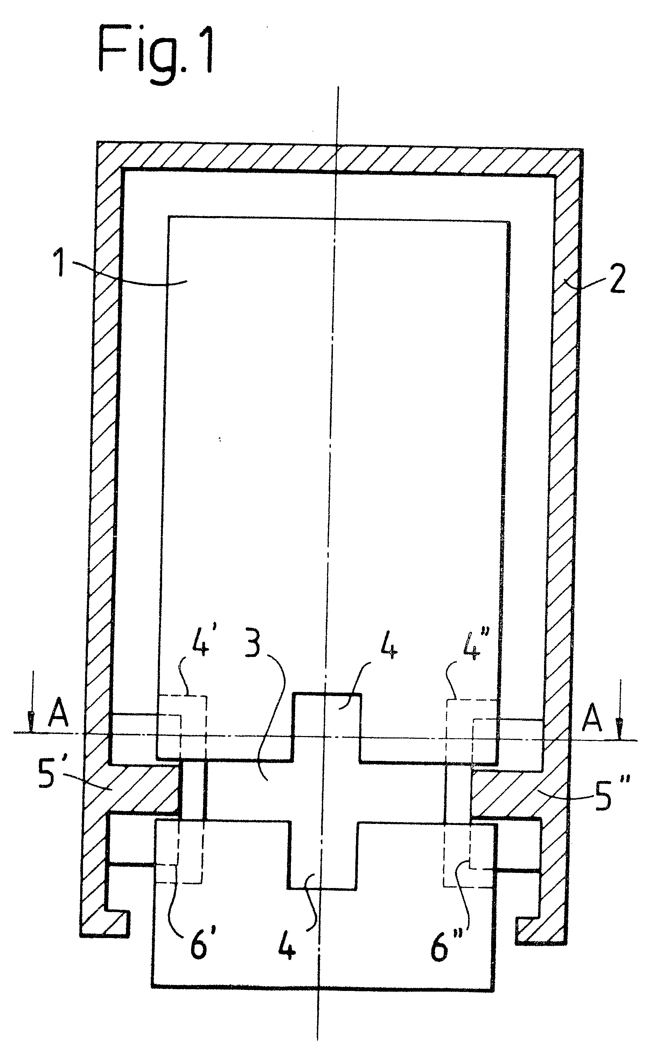

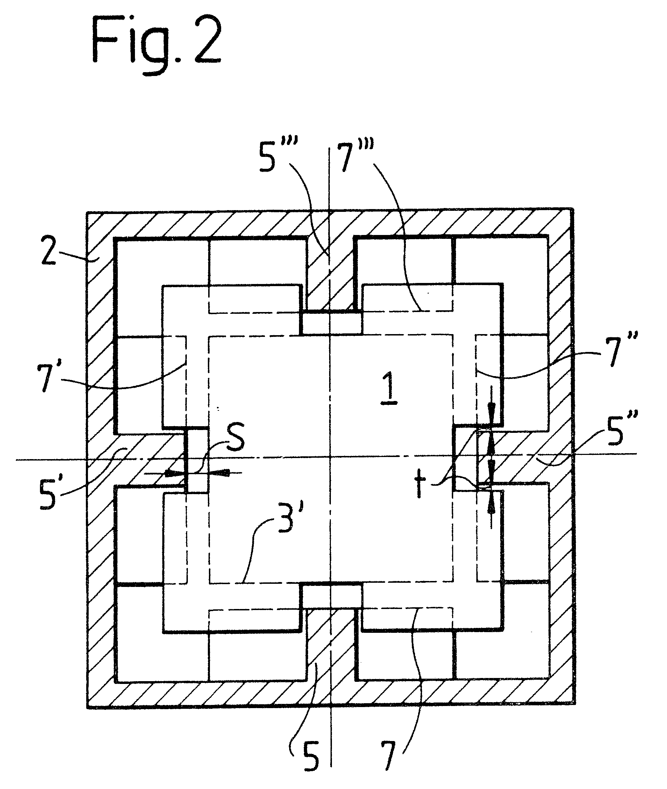

In Fig. 1 ist ein säulenförmiges Instrument 1 mit quadratischer Grundfläche sowie eine zugehörige Kunststoffverkleidung 2 im Längsschnitt dargestellt. Zur Befestigung der Verkleidung 2 weist das Instrument 1 eine um seine vier Seiten umlaufende Nut 3 auf, welche auf jeder Seite durch eine Quernut 4 zu einer Kreuznut erweitert ist. Die seitlich rechts und links am Instrument 1 befindlichen Quernuten sind als gebrochene Linie 4' und 4" dargestellt. Die Verkleidung 2 weist vier kreuzblattförmige Führungsnocken 5, 5', 5", 5''' auf, von denen Fig. 1 nur zwei Nocken 5', 5" im Längsschnitt, Fig. 2 hingegen alle vier Nocken im Querschnitt längs einer Linie A-A in Fig. 1 zeigt. Die kreuzförmigen Nocken 5, 5', 5" greifen in die Kreuznuten 4, 4', 4" ein. Die senkrecht stehenden Teile der Nocken 5', 5" sind in Fig. 1 teilweise durch das Instrument 1 verdeckt und daher durch gebrochene Linien 6', 6" dargestellt.

Die waagrechten Teile der Nocken 5, 5', 5", 5''' sind in Fig. 2 teilweise durch das Instrument 1 verdeckt und daher durch gebrochene Linien 7, 7', 7", 7''' dargestellt, ebenso wie die Nut 3 durch die umlaufende gebrochene Linie 3'. Wie aus den Fign. 1 und 2 ersichtlich, ist zwischen den Führungsnocken 5 und dem Boden der Nut 3 ein Spielraum s vorgesehen, der z.B. 0,5 mm betragen kann und notwendig ist, um zu verhindern, dass die Nocken 5 bei Schrumpfung der Verkleidung 2 am Instrument 1 zur Anlage kommen und eine Pressung verursachen. Trotzdem kann das Spiel der Verkleidung 2 gegenüber dem Instrument 1 viel kleiner gehalten werden, weil die Nocken 5 gegenüber den Seitenwänden der Nut 3 und 4 nur ein Spiel t von z.B. 0,05 mm benötigen, um auch bei unterschiedlichen Dehnungen dort nicht hängenzubleiben und Kräfte zu übertragen.

Die Verkleidung 2 ist also mit dem Instrument 1 lediglich über die Führungsnocken 5 verbunden, welche mit ihren waagrechten Teilen 7 auf der unteren Seitenwand der Nut 3 aufliegen. Bei Formänderungen der Verkleidung 2 gegenüber dem Instrument 1 infolge von Temperaturänderungen, Wasseraufnahme, Nachschwinden usw. ändern sich lediglich die weit tolerierten Abstände zwischen den Nocken 5 und dem Boden der Nut 3 und 4, sodass auf das Instrument 1 keine Spannungen übertragen werden können.

Die Erfindung ist nicht auf das vorstehend beschriebene Ausführungsbeispiel beschränkt. So kann die Anzahl der Führungsnocken mit zugehörigen Führungen mehr oder weniger als vier sein. Die Halterung der Verkleidung ist schon durch drei Lagerstellen definierbar. Sieht man z.B. oben in der Mitte eine feste Verbindung zwischen der dargestellten Verkleidung 2 und dem Instrumentenkörper 1 vor, so müssen die Nocken 5 nicht mehr die Lagerung der Verkleidung 2, sondern nur noch deren Seitenführung übernehmen. In diesem Fall sind die waagrechten Nockenteile 7 überflüssig. Die Form der Führungen und ihrer entsprechenden Gegenstücke kann soweit vereinfacht werden, dass lediglich Bohrungen hinreichender Tiefe vorgesehen sind, sowie in diese eingepasste Stifte, welche bei Formänderungen der Verkleidung in die Bohrungen mehr oder weniger tief eindringen.

### Patentansprüche

1. Instrument mit Verkleidung, dadurch gekennzeichnet, dass die tragende Instrumentenstruktur (1) oder die Verkleidung (2) zu deren Befestigung Führungen (3, 4) aufweist und dass die Verkleidung (2) oder die tragende Instrumentenstruktur (1) mit entsprechenden Führungsgegenstücken (5) versehen ist, welche in den Führungen (3, 4) derart geführt sind, dass bei Formänderungen zwischen tragender Instrumentenstruktur (1) und Verkleidung (2) keine Verspannungen entstehen.

2. Instrument nach Anspruch 1, dadurch gekennzeichnet, dass als Führungen mindestens drei Kreuzschlitze (3, 4) vorgesehen sind, welche kreuzblattförmige Führungsgegenstücke (5) aufnehmen und hinreichend tief sind, um die Führungsgegenstücke (5) spannungsfrei zu führen.

3. Instrument nach Anspruch 1, dadurch gekennzeichnet, dass als Führung mindestens eine Nut mit Hinterschneidung vorgesehen ist, in deren Längsrichtung Führungsgegenstücke mit in die Nuten passendem Profil verschieblich sind.

4. Instrument nach Anspruch 3, dadurch gekennzeichnet, dass die Verkleidung mit der tragenden Instrumentenstruktur an mindestens einer Stelle fest verbunden ist.

5. Instrument nach einem der Ansprüche 1 - 4, dadurch gekennzeichnet, dass die Verkleidung (2) mindestens teilweise aus Kunststoff besteht.

# Fig.1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 527 102 (P.W. HARLAND) <br> * Spalte 2, Zeilen 49-69 * <br> --- | 1,3-5 | G 01 D 11/24 <br> G 12 B 9/08 |
| A | FR-A-2 403 625 (VDO ADOLF SCHINDLING) <br> * Seite 5, Zeilen 14-28 * <br> --- | 1 | |
| A | EP-A-0 062 166 (NIXDORF) <br> * Seite 7, Zeilen 23-30 * <br> ----- | 1 | |

RECHERCHIERTE
SACHGEBIETE (Int. Cl.4)

G 01 D
G 12 B

Der vorliegende Recherchenbericht wurde für alle Patentansprüche erstellt

| Recherchenort | Abschlußdatum der Recherche | Prüfer |
|---|---|---|
| DEN HAAG | 02-11-1988 | TOUSSAINT F.M.A. |